## Europäisches Patentamt

## European Patent Office

## Office européen des brevets

(11) Veröffentlichungsnummer: **0 046 832**
**B1**

(12) **EUROPÄISCHE PATENTSCHRIFT**

(45) Veröffentlichungstag der Patentschrift:
16.05.84

(51) Int. Cl.³: **G 01 M 1/36**

(21) Anmeldenummer: **80810267.7**

(22) Anmeldetag: **29.08.80**

(54) Vorrichtung zum Auswuchten von umlaufenden Körpern.

(43) Veröffentlichungstag der Anmeldung:
10.03.82 Patentblatt 82/10

(45) Bekanntmachung des Hinweises auf die Patenterteilung:
16.05.84 Patentblatt 84/20

(84) Benannte Vertragsstaaten:
AT CH DE FR GB IT LI SE

(56) Entgegenhaltungen:
AT - B - 264 161
CH - A - 537 014
CH - A - 591 311
DE - B - 1 218 754
DE - B - 1 272 585
DE - B - 2 148 832
DE - C - 1 135 207
GB - A - 1 203 244

(73) Patentinhaber: **MEYER AG ZUCHWIL,
Industriestrasse 12, CH-4528 Zuchwil (CH)**

(72) Erfinder: **Lehmann, Heinz, Riedstrasse 36,
CH-2544 Bettlach (CH)**

(74) Vertreter: **Seehof, Michel et al, c/o AMMANN
PATENTANWAELTE AG BERN Schwarztorstrasse 31,
CH-3001 Bern (CH)**

BUNDESDRUCKEREI BERLIN

## Vorrichtung zum Auswuchten von umlaufenden Körpern

Die vorliegende Erfindung bezieht sich auf eine Vorrichtung zum Auswuchten von auf einer Welle gelagerten, umlaufenden Körpern, insbesondere Schleifscheiben, mittels zweier in einem Gehäuse umlaufender Wuchtmassen, deren Schwerpunktlage gegenüber dem auszuwuchtenden Körper verstellbar ist.

Es ist beispielsweise gemäß CH-A-537 014 möglich, die Wuchtmassen in einem automatischen Betrieb mittels je einem Elektromotor zu verstellen. Während die Verstellung mittels Elektromotoren den Vorteil hat, eine auf dem zur Verfügung stehenden Raum maximale Wuchtmasse verwenden zu können, bedingt der Elektromotor einen relativ großen Aufwand und vor allem die Verwendung von stirnseitig angeordneten Schleifringen.

Andererseits ist es bekannt, das Verstellen der Wuchtmassen mittels mechanischer Stelltriebe vorzunehmen, die jedoch in der Regel störanfällig und zum Teil sehr aufwendig sind. Außerdem nehmen die mechanischen Stelltriebe relativ viel Platz in Anspruch, der dann nicht mehr für die Wuchtmasse zur Verfügung steht. So sind außerdem beispielsweise von DE-B-1 218 754 oder CH-A-591 311 Auswuchtgeräte bekannt, bei welchen der Massenausgleich durch abwechslungsweises Betätigen zweier Steuerknöpfe erfolgt, welche zwei Stellmechanismen und daher relativ viel Platz beanspruchen.

Es ist demgegenüber Aufgabe der vorliegenden Erfindung, eine Vorrichtung zum Auswuchten anzugeben, die mechanische Stelltriebe aufweist, die einerseits einen sehr einfachen Aufbau aufweisen und andererseits eine auf den verfügbaren Raum bezogen große Auswuchtmasse enthält. Diese Aufgabe wird bei einer Vorrichtung der eingangs genannten Art durch die im Anspruch 1 gekennzeichneten Maßnahmen gelöst.

Die Erfindung wird nun im einzelnen anhand einer Zeichnung eines Ausführungsbeispiels näher erläutert werden.

Fig. 1 zeigt einen Längsschnitt durch eine erfindungsgemäße Auswuchtvorrichtung.

Fig. 2 zeigt einen Querschnitt der Vorrichtung von Fig. 1 und

Fig. 3 zeigt die vier Stellungen des Schaltgetriebes der Vorrichtung von Fig. 1.

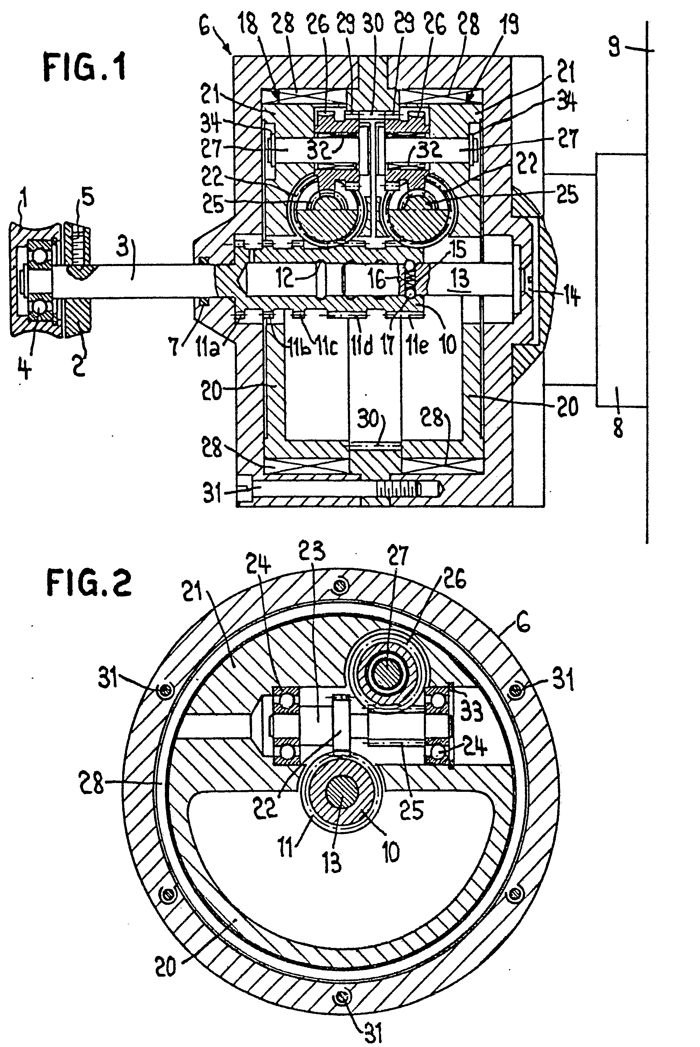

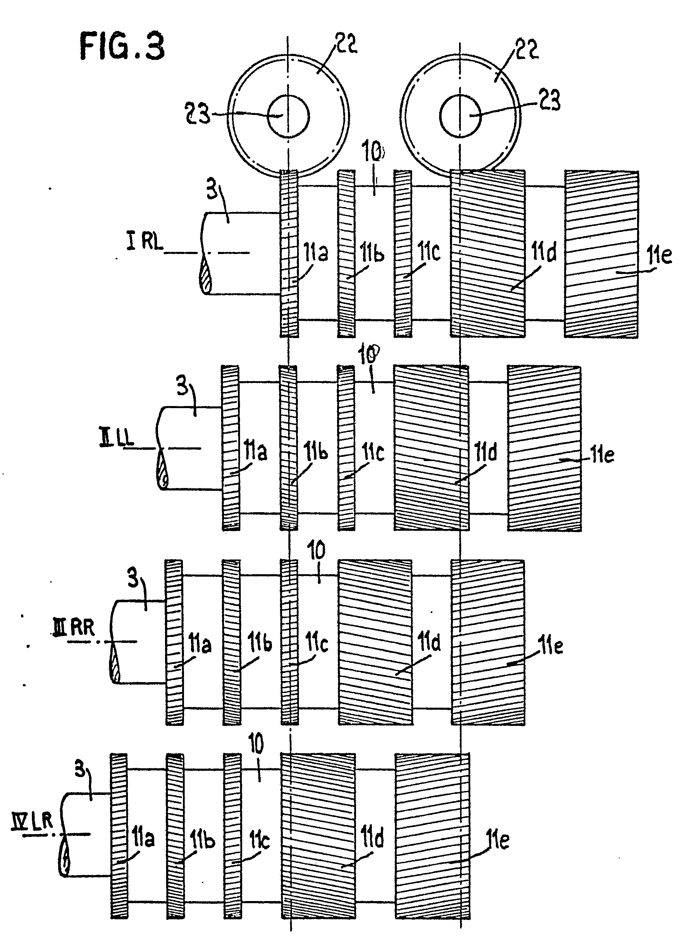

Man erkennt in Fig. 1, von links nach rechts, den Schaltknopf 1 und den Bremsknopf 2, die sich auf der Schaltwelle 3 befinden. Der Schaltknopf 1 ist über ein Kugellager 4 mit der Schaltwelle verbunden, während der Bremsknopf 2 mit einer Befestigungsschraube 5 an der Schaltwelle befestigt ist. Die Schaltwelle 3 ist im Gehäuse 6 gleitbar angeordnet und im Gehäuse nach außen mittels einem O-Ring 7 abgedichtet. Das Gehäuse 6 ist über einen Flansch 8 fest mit der Schleifscheibe 9 verbunden. Am Ende der Schaltwelle 3 ist eine erste Schneckenwelle 10 befestigt, die, siehe Fig. 3, fünf Schnecken 11a, b, c, d, e unterschiedlicher Dicke und Drehsinn aufweist. Die hohle Schneckenwelle 10 weist innen vier umlaufende Rastnuten 12 auf und gleitet über eine Führungswelle 13, die mittels einer Senkschraube 14 am Gehäuse 6 befestigt ist. Die Führungswelle 13 ist an einer Stelle durchbohrt, wobei in dieser Bohrung 15 aus einer Feder 16 und zwei Kugeln 17 bestehende Rastmittel angebracht sind, die beim Verschieben der Schaltwelle jeweils in eine der vier Rastnuten 12 einrasten. Dadurch werden die vier in Fig. 3 dargestellten Stellungen markiert.

Die Schneckenwelle steht mit den beiden Wuchtmassen 18 und 19 im Eingriff, die je aus einem Zylinder 20, einer Füllmasse 21 und den Getrieben bestehen. Wie insbesondere aus Fig. 2 hervorgeht, steht jeweils eine der Schnecken der ersten Schneckenwelle 10 im Eingriff mit einem Zahnrad 22 auf einer zweiten Schneckenwelle 23, die von zwei Kugellagern 24 geführt und von einem Seegerring 33 abgeschlossen ist. Die Schneckenwelle 23 weist eine Schnecke 25 auf, die mit einem Schneckenrad 26 im Eingriff steht. Dieses Schneckenrad 26 ist über ein Nadellager 32 um eine Achse 27 gelagert, die über Seegerringe 34 an der Füllmasse 21 befestigt ist. Man ersieht auch aus Fig. 2, daß die zum Massenausgleich zur Verfügung stehende Wuchtmasse sich aus der Differenz zwischen der einen Zylinderwandhälfte, in Fig. 2 unten, und dem aus der Schneckenwelle, Schneckenrad mit Achse und Füllmasse bestehenden oberen Hälfte ergibt. Dabei ist es möglich, über die Wanddicke der unteren Zylinderwandhälfte diese Differenz genau einzustellen. Die Wuchtmassenzylinder 18 und 19 werden außen von je einem Nadellager 28 im Gehäuse 6 geführt. Das Schneckenrad 26 steht über einen inneren Zahnkranz 29 mit einem in der Gehäusemitte eingelassenen Zahnring 30 im Eingriff, so daß die Drehung der Schleifscheibe über das Gehäuse 6, Zahnring 30, innerer Zahnkranz 29, Schneckenrad 26 und zweite Schneckenwelle 23 via Zahnrad 22 auf die erste Schneckenwelle 10 und damit auf die Schaltwelle 3 übertragen wird. Dabei ist hervorzuheben, daß die Schneckengetriebe selbsthemmend wirken.

Zur vollständigen Vorrichtung zum Auswuchten gehört ein nicht dargestellter Schwingungsaufnehmer sowie eine dazugehörige, ebenfalls nicht dargestellte Elektronik mit einer Anzeige, um das Ausmaß der Unwucht darzustellen. In der Regel wird das Anzeigefeld in einen grünen und in einen roten Anzeigebereich unterteilt, wobei der Auswuchtvorgang beendet ist, falls sich die Anzeigenadel im grünen Bereich bewegt.

Um ein Auswuchten, beispielsweise einer Schleifscheibe durchzuführen, wird das Gehäuse des Auswuchtgerätes an der Schleifscheibe angeflanscht, das elektronische Gerät eingeschaltet und die Scheibe auf die Arbeitsdrehzahl gebracht. Um das Auswuchten durchzuführen, wird die Schaltwelle mittels des Schaltknopfes 1 in eine der vier Stellungen der Fig. 3 gebracht und mittels des Bremsknopfes 2 abgebremst, wobei, von oben nach unten gesehen, in Stellung I die Unwuchtmassen gegenläufig rechts-links, RL, in Stellung II die Unwuchtmassen gleichläufig nach links, LL, in Stellung III die Unwuchtmassen gleichläufig nach rechts, RR, und in Stellung IV die Unwuchtmassen gegenläufig links-rechts, LR, verschoben werden. Dabei entsprechen die beiden extremen Stellungen I und IV einem Grobabgleich und die beiden inneren Stellungen II und III einem Feinabgleich. Daraus ergeben sich die vier Drehrichtungen der beiden Massen aus dem Drehsinn, links oder rechts der Schnecken und der Dicke der Schnecken, sowie aus ihrem Abstand voneinander. Das Abgleichen selber, d. h. das Verstellen der Wuchtmassen, resp. der zweiten Schneckenwelle in bezug auf die erste Schneckenwelle geschieht durch Abbremsen der sonst mit gleicher Geschwindigkeit wie die Schleifscheibe umdrehenden Schaltwelle mittels des Bremsknopfes 2, während das Verschieben der Schaltwelle in die vier Positionen I bis IV durch den kugellager-gelagerten Schaltknopf 1 geschieht. Dabei verschieben sich die Wuchtmassen infolge der starken Untersetzung durch die Schneckengetriebe, z. B. 1 : 2500, sehr langsam, wodurch ein feines Auswuchten möglich ist. Beim erstmaligen Auswuchten wird man zuerst einen Ausgleich in der ersten Stellung vornehmen, um festzustellen, in welche Richtung die Nadel ausschlägt. Bewegt sich die Nadel stärker in den roten Bereich hinein, wird man einen Ausgleich in der vierten Stellung vornehmen und anschließend in den Stellungen II oder III. In der Regel wird man einen Zyklus ein oder mehrere Male wiederholen müssen, bis die Nadel im grünen Bereich verbleibt. Für geringfügiges Nachstellen beim Abnutzen der Schleifscheibe wird in der Regel ein Abgleich in den Stellungen II und III genügen. Ein Auswuchten mit einer solchen Vorrichtung ist sehr einfach und kann innert kürzester Zeit bewerkstelligt werden.

**Patentansprüche**

1. Vorrichtung zum Auswuchten von auf einer Welle gelagerten, umlaufenden Körpern, insbesondere Schleifscheiben, mittels zweier in einem Gehäuse (6) umlaufender Wuchtmassen, deren Schwerpunktlage gegenüber dem auszuwuchtenden Körper verstellbar ist, dadurch gekennzeichnet, daß die beiden Wuchtmassen (18, 19) mittels einer einzigen Schaltwelle (3) verstellbar sind, wobei die Schaltwelle und die Wuchtmassen über ein eine erste Schneckenwelle (10) aufweisendes selbsthemmendes Schneckengetriebe (10, 22) miteinander im Eingriff stehen.

2. Vorrichtung nach Anspruch 1, dadurch gekennzeichnet, daß jede Wuchtmasse (18, 19) eine zweite Schneckenwelle (23) aufweist, mit einem Zahnrad (22), das mit einem der Schnecken (11a—11e) der ersten Schneckenwelle (10) an der Schaltwelle (3) im Eingriff steht und einer Schnecke (25), die über ein Schneckenrad (26) und Verzahnungen (29, 30) mit dem Gehäuse (6) im Eingriff steht.

3. Vorrichtung nach Anspruch 1 oder 2, dadurch gekennzeichnet, daß die Wuchtmasse (18 oder 19) aus einem Hohlzylinder (20) besteht, in welchem in etwa einer Hälfte desselben eine Füllmasse (21), sowie die zweite Schneckenwelle (23) und das Schneckenrad (26) enthalten sind.

4. Vorrichtung nach einem der Ansprüche 1 bis 3, dadurch gekennzeichnet, daß die erste Schneckenwelle (10) der Schaltwelle (3) fünf Schnecken (11a—11e) unterschiedlicher Dicke und Drehsinn aufweist, von denen je eines mit einem Zahnrad (22) der zweiten Schneckenwelle (23) in der Wuchtmasse im Eingriff steht und daß am äußeren Ende der Schaltwelle (3) ein Kugellager (4) gelagerter Schaltknopf (1) und daran anschließend ein an der Schaltwelle (3) befestigter Bremsknopf (2) angeordnet sind.

5. Vorrichtung nach einem der Ansprüche 1 bis 4, dadurch gekennzeichnet, daß die erste Schneckenwelle (10) hohl ist und an ihrem freien Ende auf einer Führungswelle (13) gleitet und in vier Stellungen (I, II, III, IV) schiebbar ist, wobei an der Führungswelle (13) Rastmittel (16, 17) angebracht sind, die in jeweils eine der vier umlaufenden Rastnuten (12) in der ersten Schneckenwelle (10) einrasten.

6. Vorrichtung nach einem der Ansprüche 1 bis 5, dadurch gekennzeichnet, daß die Schnecken (11a—11e) der ersten Schneckenwelle (10) derart ausgebildet sind, daß beim Abbremsen der Schaltwelle (3) durch den Bremsknopf (2), beide Wuchtmassen (18, 19) in der Stellung I gegensinnig (RL), in Stellung II gleichsinnig links (LL), in Stellung III gleichsinnig rechts (RR) und in Stellung IV gegensinnig (LR) verschiebbar sind.

7. Vorrichtung nach einem der Ansprüche 1 bis 6, dadurch gekennzeichnet, daß das mit der Schnecke (25) der zweiten Schneckenwelle (23) im Eingriff stehende Schneckenrad (26) einen inneren Zahnkranz (29) aufweist, der mit einem in der Mitte des Gehäuses (6) eingelassenen Zahnring (30) im Eingriff steht und auf einer Achse (27) gelagert ist.

8. Vorrichtung nach einem der Ansprüche 1 bis 7, dadurch gekennzeichnet, daß die Wuchtmassen bezüglich des Gehäuses (6) und das Schneckenrad (26) auf der Achse (27) mittels Nadellager (28 resp. 32) gelagert sind.

**Claims**

1. A device for balancing rotating bodies which are mounted on a shaft, more especially grinding discs, by means of two rotating inertia masses within a housing (6), the position of the centre of gravity of the masses being adjustable relatively to the body to be balanced, characterized in that the two inertia masses (18, 19) are adjustable by means of a single switch shaft (3), the switch shaft and the inertia masses being engaged one with the other by means of a self-locking worm gear (10, 22) comprising a first worm shaft (10).

2. A device according to claim 1, characterized in that each inertia mass (18, 19) comprises a second worm shaft (23) having a toothed wheel (22) which is in engagement with one of the worms (11a—11e) of the first worm shaft (10) on the switch shaft (3) and having a worm (25) which is in engagement with the housing (6) via a worm wheel (26) and a toothed ring (29, 30).

3. A device according to claim 1 or 2, characterized in that the inertia mass (18 or 19) consists of a hollow cylinder (20) containing in substantially one half thereof a fillmass (21), the second worm shaft (23) and the worm wheel (26).

4. A device according to one of the claims 1 to 3, characterized in that the first worm shaft (10) of the switch shaft (3) comprises five worms of different thicknesses and directions of rotations, each one of those worms being in engagement in the inertia mass with a toothed wheel (22) of the second worm shaft (23) and in that a switch knob (1) mounted on a ball bearing (4) and a bracke knob (2) secured to the switch shaft (3) are both disposed at the outer end of the switch shaft (3).

5. A device according to one of the claims 1 to 4, characterized in that the first worm shaft (10) is hollow and slides at its free end on a guide shaft (13), the first worm shaft (10) being slidable into four positions (I, II, III, IV), engaging means (16, 17) being mounted on the guide shaft (13) which each engage in one of four encircling notched grooves (12) provided in the first worm shaft (10).

6. A device according to one of the claims 1 to 5, characterized in that the worms (11a—11e) of the first worm shaft (10) are so designed that when the switch shaft (3) is braked by the brake knob (2), both inertia masses in position I are displaceable countercurrently (RL), in position II are displaceable concurrently to the left (LL), in position III are displaceable concurrently to the right (RR) and in position IV are displaceable countercurrently (LR).

7. A device according to one of the claims 1 to 6, characterized in that the worm wheel (26) which is in engagement with the worm (25) of the second worm shaft (23) comprises an inner toothed ring (29) mounted on a shaft (27) and being in engagement with a toothed ring (30) introduced in the centre of the housing (6).

8. A device according to one of the claims 1 to 7, characterized in that the inertia masses, relative to the housing (6) and the worm wheel (26) are mounted on the shaft (27) by means of needle bearings (28, resp. 32).

**Revendications**

1. Dispositif pour équilibrer des corps en rotation montés sur un arbre, plus particulièrement des meules, à l'aide de deux masses d'inertie rotatives dans un boîtier (6), la position du centre de gravité des masses d'inertie étant ajustable par rapport au corps à équilibrer, caractérisé en ce que les deux masses d'inertie (18, 19) sont ajustables au moyen d'un seul arbre de commutation (3), l'arbre de commutation et les masses d'inertie étant en engagement mutuel à l'aide d'un engrenage à vis sans fin autobloquant (10, 22) comprenant un premier arbre à vis sans fin (10).

2. Dispositif selon la revendication 1, caractérisé en ce que chaque masse d'inertie (18, 19) comprend un second arbre à vis sans fin (23) avec une roue dentée (22) en engagement avec une des vis sans fin (11a—11e) du premier arbre à vis sans fin (10) sur l'arbre de commutation (3) et une vis sans fin (25) en engagement avec le boîtier (6) par une roue-vis (26) et des dentures (29, 30).

3. Dispositif selon la revendication 1 ou 2, caractérisé en ce que la masse d'inertie (18 ou 19) consiste en un cylindre creux (20) contenant sur environ une moitié de celui-ci une masse de remplissage (21) ainsi que le second arbre à vis sans fin (23) et la roue-vis (26).

4. Dispositif selon l'une des revendications 1 à 3, caractérisé en ce que le premier arbre à vis sans fin (10) de l'arbre de commutation (3) comprend cinq vis sans fin (11a—11e) de différentes épaisseurs et sens de rotation, chacune d'elles étant en engagement dans la masse d'inertie avec une roue dentée (22) du second arbre à vis sans fin (23), et en ce qu'un bouton de commutation (1) monté sur un roulement à billes (4) et un bouton de freinage (2) fixé à l'arbre de commutation (3) sont disposés à l'extrémité extérieure de l'arbre de commutation (3).

5. Dispositif selon l'une des revendications 1 à 4, caractérisé en ce que le premier arbre à vis sans fin (10) est creux, qu'il glisse à son extrémité libre sur un arbre de guidage (13) et qu'il peut être déplacé dans quatre positions (I, II, III, IV), des moyens d'engagement (16, 17) étant prévus sur l'arbre de guidage (13) pour s'engager chacun dans une parmi quatre rainures d'engagement circulaires (12) dans le premier arbre à vis sans fin (10).

6. Dispositif selon l'une des revendications 1 à 5, caractérisé en ce que les vis sans fin (11a—11e) du premier arbre à vis sans fin (10) sont de conception telle que lors du freinage de l'arbre de commutation (3) par le bouton de freinage (2), les deux masses d'inertie (18, 19) sont déplacées en position I en sens inverse (RL), en position II dans le même sens vers la gauche (LL), en position III dans le même sens vers la droite (RR) et en position IV en sens inverse (LR).

7. Dispositif selon l'une des revendications 1 à 6, caractérisé en ce que la roue-vis (26) en engagement avec la vis sans fin (25) du second arbre à vis sans fin (23) comprend une couronne dentée intérieure (29) montée sur un arbre (27) et en engagement avec un anneau denté (30) introduit au centre du boîtier (6).

8. Dispositif selon l'une des revendications 1 à 7, caractérisé en ce que des masses d'inertie sont montées sur l'arbre (27), relativement au boîtier (6) et à la roue-vis (26), au moyen de paliers à aiguilles (28, resp. 32).

FIG.1

FIG.2

**FIG.3**